# EUROPÄISCHE PATENTSCHRIFT

(11) **EP 2 283 263 B1**
(45) Veröffentlichungstag und Bekanntmachung des Hinweises auf die Patenterteilung: **17.04.2013**
(21) Anmeldenummer: 09761385.5
(22) Anmeldetag: 22.05.2009
(51) Int. Cl.: F16K 27/02

(54) **GASREGELGERÄT**
GAS REGULATING UNIT
APPAREIL DE RÉGULATION DE GAZ

(30) Priorität: 11.06.2008 DE 102008027796
(43) Veröffentlichungstag der Anmeldung: 16.02.2011
(73) Patentinhaber: Honeywell Technologies Sarl, 1180 Rolle (CH)
(72) Erfinder: TRENZ, Milos, 664 83 Domasov (CZ)
(74) Vertreter: Sturm, Christoph
(86) Internationale Anmeldenummer: PCT/EP2009/003659
(87) Internationale Veröffentlichungsnummer: WO 2009/149822

(56) Entgegenhaltungen:
- DE-U1- 20 214 258
- GB-A- 2 413 618
- US-A1- 2003 030 024
- US-A1- 2003 145 891
- US-A1- 2004 163 704
- US-A1- 2009 092 936

## Beschreibung

Die Erfindung betrifft ein Gasregelgerät nach dem Oberbegriff des Anspruchs 1.

Aus der Praxis bekannte Gasregelgeräte verfügen über einen Ventilkörper, der eine Gaseinlasskammer und eine Gasauslasskammer bildet, sowie über ein Sicherheitsventil und ein Hauptgasventil. Mit Hilfe des Sicherheitsventils und des Hauptgasventils wird entweder ein Gasstrom von der Gaseinlasskammer in die Gasauslasskammer freigegeben oder gesperrt. Beim Sicherheitsventil handelt es sich typischerweise um ein Ventil, welches entweder geöffnet oder geschlossen ist. Beim Hauptgasventil handelt es sich vorzugsweise um ein modulierendes Gasventil, mit welchem die Größe des von der Gaseinlasskammer in die Gasauslasskammer fließenden Gasstroms eingestellt werden kann.

Bei aus der Praxis bekannten Gasregelventilen ist der Ventilgrundkörper aus Metall, insbesondere aus einer Aluminiumlegierung, hergestellt. Da die Ventilgrundkörper über eine komplexe Kontur bzw. Geometrie verfügen, ist die Herstellung von Ventilgrundkörpem aus einer Aluminiumlegierung aufwendig und teuer. Es besteht daher Bedarf an Gasregelventilen, die mit geringerem Kostenaufwand hergestellt werden können.

Die US 2003/0030024 A1 offenbart ein Gasregelgerät mit den Merkmalen des Oberbegriffs des Anspruchs 1.

Der Erfindung liegt die Aufgabe zu Grunde, ein neuartiges Gasregelgerät zu schaffen. Diese Aufgabe wird durch ein Gasregelgerät mit den Merkmalen des Anspruchs 1 gelöst.

Der Ventilgrundkörper des erfindungsgemäßen Gasregelgeräts besteht aus mindestens drei Teilen, nämlich mindestens einem Kunststoffkern und mindestens zwei metallischen Schalen, die den oder jeden Kunststoffkern im Bereich der Oberseite und der Unterseite zumindest abschnittsweise umschließen. Der Kunststoffkern stellt dabei die Gaseinlasskammer mit dem Anschlussstutzen für die Gaszuführleitung und die Gasauslasskammer mit dem Anschlussstutzen für die Gasabführleitung bereit, wobei ein solcher Kunststoffkern mit geringerem Kostenaufwand gefertigt werden kann wie aus dem Stand der Technik bekannte Ventilgrundkörper aus einer Aluminiumlegierung. Die metallischen Schalen übernehmen in erster Linie die Aufgabe, den Kunststoffkern vor mechanischen Belastungen zu schützen, die von außen auf denselben einwirken, wobei die metallischen Schalen auch die Anschlussstutzen des Kunststoffkerns umschließen und Anschlusselemente zum gegenseitigen Verbinden der metallischen Schalen aufweisen.

Bevorzugte Weiterbildungen der Erfindung ergeben sich aus den Unteransprüchen und der nachfolgenden Beschreibung.

Nachfolgend wird Ausführungsbeispiel der Erfindung, ohne hierauf beschränkt zu sein, anhand der Zeichnung näher erläutert. In der Zeichnung zeigt:

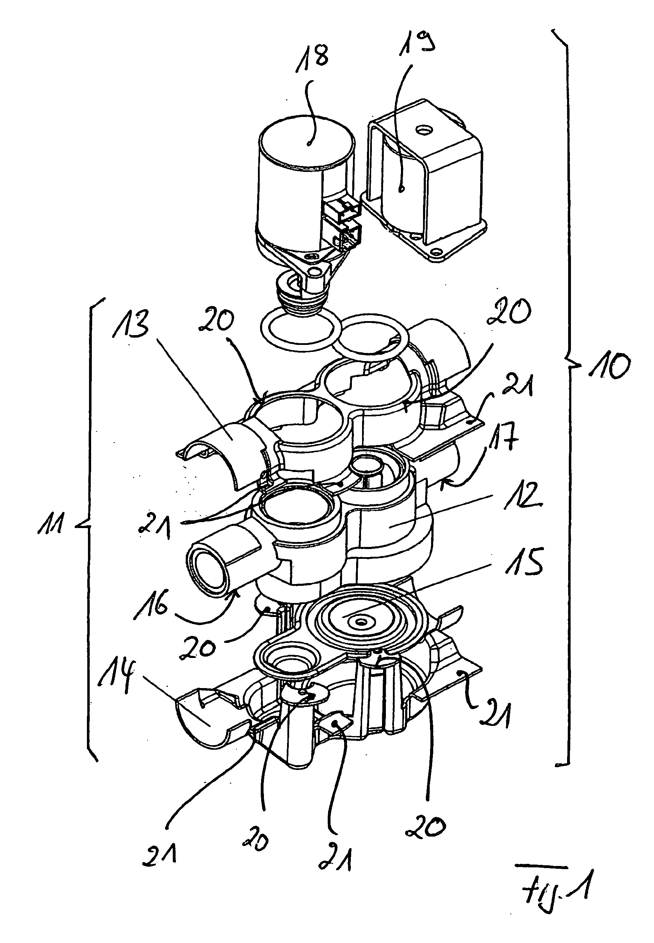

- Fig. 1:: eine Explosionsdarstellung eines erfindungsgemäßen Gasregelgeräts.

Fig. 1 zeigt eine Explosionsdarstellung eines erfindungsgemäßen Gasregelgeräts 10, wobei das Gasregelgerät 10 der Fig. 1 einen Ventilgrundkörper 11 umfasst. Weiterhin umfasst das Gasregelgerät 10 ein Sicherheitsventil und ein Hauptgasventil.

Der Ventilgrundkörper 11 des erfindungsgemäßen Gasregelgeräts 10 besteht im gezeigten Ausführungsbeispiel aus drei Teilen, nämlich einem Kunststoffkern 12, einer ersten metallischen Schale 13 und einer zweiten metallischen Schale 14. Der Kunststoffkern 12 definiert eine Gaseinlasskammer und eine Gasauslasskammer des Gasregelgeräts, wobei an der Gaseinlasskammer ein Anschlussstutzen 16 für eine Gaszuführleitung und an der Gasauslasskammer ein Anschlussstutzen 17 für eine Gasabführleitung ausgebildet ist.

Die erste metallische Schale 13 umschließt den Kunststoffkern 12 an einer Oberseite desselben zumindest abschnittsweise. Die zweite metallische Schale 14 umschließt den Kunststoffkern 12 an einer Unterseite desselben ebenfalls zumindest abschnittsweise.

Zwischen dem Kunststoffkern 12 und der unteren metallischen Schale 14 ist eine Membran 15 positioniert, die zumindest für das Hauptgasventil eine Antriebskammer begrenzt, in welcher ein Servodruck herrscht. Die Membran 15, die zwischen der Unterseite des Kunststoffkerns 12 und der den Kunststoffkern 12 an der Unterseite umschließenden zweiten metallischen Schale 14 positioniert ist, und die zweite metallische Schale 14 begrenzen gemeinsam mindestens eine Antriebskammer, in welcher jeweils ein Servodruck herrscht.

Die den Kunststoffkern 12 zumindest abschnittsweise umschließenden metallischen Schalen 13. 14 verfügen über Anschlusselemente 20 für die Aktuatoren bzw. Operatoren 18, 19 des Sicherheitsventils und Hauptgasventils, wobei es sich bei den Operatoren 18, 19 vorzugsweise um Magnete handelt. Weiterhin kann ein Anschlusselement für den Anschluss eines Druckreglers vorhanden sein, über welchen ein Servodruck eingestellt werden kann.

Die metallischen Schalen 13, 14 umgeben die Anschlussstutzen 16, 17 des Kunststoffkerns 12. Befestigungselemente, über welche die Gaszuführleitung am Anschlussstutzen 16 und die Gasabführleitung am Anschlussstutzen 17 befestigt werden können, greifen demnach an den Abschnitten der metallischen Schalen 13, 14 an, welche die Anschlussstutzen 16, 17 umschließt.

Der Kunststoffkern 12 dient insbesondere der Bereitstellung einer Gaseinlasskammer und Gasauslasskammer des Gasregelgeräts. Die metallischen Schalen 13, 14, die den Kunststoffkern 12 zumindest abschnittsweise umschließen, stabilisieren den Kunststoffkern 12 und schützen denselben vor mechanischen Belastungen, die von außen auf den Kunststoffkern 12 einwirken können. So greifen Befestigungseinrichtungen, über welche die Gaszuführleitung und Gasabführleitung an den Anschlussstutzen 16, 17 befestigt werden können, an den die Anschlussstutzen 16, 17 umschließenden Abschnitten der metallischen Schalen 13, 14 an. Auch die Operatoren 18, 19 sind an den Anschlusselementen 20 der metallischen Schalen 13, 14 befestigt bzw. greifen an denselben an. Mechanische Kräfte werden demnach von den metallischen Schalen 13, 14 aufgenommen, sodass der Kunststoffkern 12 im Wesentlichen nur Belastungen ausgesetzt ist, die durch die Gasströmung verursacht sind.

Die den Kunststoffkern 12 an der Oberseite und Unterseite umschließenden metallischen Schalen 13, 14 verfügen weiterhin über Anschlusselemente 21, an welchen die beiden metallischen Schalen 13, 14 miteinander verbunden werden können.

### Bezugszeichenliste

- 10: Gasregelgerät
- 11: Ventilgrundkörper
- 12: Kunststoffkern
- 13: erste metallische Schale
- 14: zweite metallische Schale
- 15: Membran
- 16: Anschlussstutzen
- 17: Anschlussstutzen
- 18: Operator
- 19: Operator
- 20: Anschlusselement
- 21: Anschlusselement

## Patentansprüche

1. Gasregelgerät, mit einem zumindest eine Gaseinlasskammer und eine Gasauslasskammer bildenden Ventilgrundkörper (11), mit einem Sicherheitsventil und mit einem Hauptgasventil, wobei das Sicherheitsventil und das Hauptgasventil entweder einen Gasstrom von der Gaseinlasskammer in die Gasauslasskammer freigeben oder sperren, wobei der Ventilgrundkörper (11) aus mindestens drei Teilen besteht, nämlich aus mindestens einem Kunststoffkern (12), der die Gaseinlasskammer und die Gasauslasskammer definiert, und aus mindestens zwei metallischen Schalen (13, 14), wobei eine erste metallische Schale (13) den Kunststoffkern (12) an einer Oberseite zumindest abschnittsweise umschließt und wobei eine zweite metallische Schale (14) den Kunststoffkern (12) an einer Unterseite zumindest abschnittsweise umschließt, und wobei zwischen einer dieser metallischen Schalen (14) und dem Kunststoffkern (12) mindestens eine Membran (15) positioniert ist, die für das Sicherheitsventil und/oder das Hauptgasventil jeweils eine Antriebskammer, in welcher ein Servodruck herrscht, begrenzt, **dadurch gekennzeichnet, dass** der Kunststoffkern (12) im Bereich der Gaseinlasskammer einen Anschlussstutzen (16) für eine Gaszuführleitung und Bereich der Gasauslasskammer einen Anschlussstutzen (17) für eine Gasabführleitung definiert und ausbildet, wobei die metallischen Schalen (13, 14) die Anschlussstutzen (16, 17) des Kunststoffkerns (12) umschließen, und wobei die den Kunststoffkern (12) an der Oberseite und Unterseite umschließenden metallischen Schalen (13, 14) Anschlusselemente (21) zum gegenseitigen Verbinden der metallischen Schalen (13, 14) aufweisen.

2. Gasregelgerät nach Anspruch 1, **dadurch gekennzeichnet, dass** die Membran (15) zwischen der Unterseite des Kunststoffkerns (12) und der den Kunststoffkern (12) an der Unterseite umschließenden zweiten metallischen Schale (14) positioniert ist, wobei die oder jede Antriebskammer, in welcher ein Servodruck herrscht, einerseits von der Membran und andererseits von der zweiten metallischen Schale begrenzt ist.

3. Gasregelgerät nach Anspruch 1 oder 2, **dadurch gekennzeichnet, dass** die erste metallische Schale (13) und/oder die zweite metallische Schale (14) Anschlusselemente (20) für Aktuatoren bzw. Operatoren (18, 19) wie Magnete zur Betätigung des Sicherheitsventils und/oder des Hauptgasventil und/oder für einen der Servodruckeinstellung dienenden Druckregler aufweist.

## Claims

1. Gas regulating unit having a valve basic body (11) forming at least a gas inlet chamber and a gas outlet chamber, having a safety valve and having a main gas valve, wherein the safety valve and the main gas valve either allow or shut off a gas flow from the gas inlet chamber into the gas outlet chamber, wherein the valve basic body (11) comprises at least three parts, namely at least one plastic core (12), which defines the gas inlet chamber and the gas outlet chamber, and at least two metallic shells (13, 14), wherein a first metallic shell (13) encloses the plastic core (12), at least in sections, on a top side and wherein a second metallic shell (14) encloses the plastic core (12), at least in sections, on a bottom side, and wherein between one of these metallic shells (14) and the plastic core (12) there is positioned at least one diaphragm (15), which for the safety valve and/or the main gas valve respectively delimits a drive chamber, in which a servo pressure prevails, **characterized in that** the plastic core (12) defines and forms, in the region of the gas inlet chamber, a connecting socket (16) for a gas supply line and, in the region of the gas outlet chamber, a connecting socket (17) for a gas evacuation line, wherein the metallic shells (13, 14) enclose the connecting sockets (16, 17) of the plastic core (12), and wherein the metallic shells (13, 14) enclosing the plastic core (12) on the top side and the bottom side have connecting elements (21) for the mutual connection of the metallic shells (13, 14).

2. Gas regulating unit according to Claim 1, **characterized in that** the diaphragm (15) is positioned between the bottom side of the plastic core (12) and the second metallic shell (14) by which the plastic core (12) is enclosed on the bottom side, wherein the or each drive chamber, which a servo pressure prevails, is delimited on the one hand by the diaphragm and on the other hand by the second metallic shell.

3. Gas regulating unit according to Claim 1 or 2, **characterized in that** the first metallic shell (13) and/or the second metallic shell (14) has connecting elements (20) for actuators or operators (18, 19), such as magnets, for actuating the safety valve and/or the main gas valve, and/or for a pressure regulator serving to adjust the servo pressure.

## Revendications

1. Appareil de régulation de gaz, avec un corps de base de soupape (11) formant au moins une chambre d'admission de gaz et une chambre d'évacuation de gaz, avec une soupape de sécurité et avec une soupape de gaz principale, la soupape de sécurité et la soupape de gaz principale libérant ou bloquant un flux de gaz de gaz circulant de la chambre d'admission de gaz dans la chambre d'évacuation de gaz, le corps de base de soupape (11) se composant d'au moins trois parties, notamment d'au moins un coeur en matière plastique (12) définissant la chambre d'admission de gaz et la chambre d'évacuation de gaz et d'au moins deux coques métalliques (13, 14), une première coque métallique (13) entourant le coeur en matière plastique (12) au niveau d'un côté supérieur, au moins sur une de ses sections, et une deuxième coque métallique (14) entourant le coeur en matière plastique (12) au niveau d'un côté inférieur, au moins sur une de ses sections, et au moins une membrane (15) étant positionnée entre une de ces coques métalliques (14) et le coeur en matière plastique (12), ladite membrane délimitant respectivement, pour la soupape de sécurité et/ou la soupape de gaz principale, une chambre d'entraînement dans laquelle règne une servopression, **caractérisé en ce que** le coeur en matière plastique (12) définit et forme un manchon de raccordement (16) pour une conduite d'admission de gaz dans la zone de la chambre d'admission de gaz et un manchon de raccordement (17) pour une conduite d'évacuation de gaz dans la zone de la chambre d'évacuation de gaz, les coques métalliques (13, 14) entourant les manchons de raccordement (16, 17) du coeur en matière plastique (12) et les coques métalliques (13, 14) entourant le coeur en matière plastique (12) au niveau du côté supérieur et du côté inférieur comprenant des éléments de raccordement (21) permettant un raccordement mutuel des coques métalliques (13, 14).

2. Appareil de régulation de gaz selon la revendication 1, **caractérisé en ce que** la membrane (15) est positionnée entre le côté inférieur du coeur en matière plastique (12) et la deuxième coque métallique (14) entourant le coeur en matière plastique (12) au niveau du côté inférieur, la ou les chambres d'entraînement dans lesquelles règne une servopression étant délimitées d'une part par la membrane et d'autre part par la deuxième coque métallique.

3. Appareil de régulation de gaz selon la revendication 1 ou 2, **caractérisé en ce que** la première coque métallique (13) et/ou la deuxième coque métallique (14) comporte des éléments de raccordement (20) pour les actionneurs et/ou les activateurs (18, 19) tels que les aimants servant à l'actionnement de la soupape de sécurité et/ou de la soupape de gaz principale et/ou pour un des régulateurs de pression servant au réglage de la servopression.
